Europäisches Patentamt

**European Patent Office**

**Office européen des brevets**

(11) Numéro de publication: **0 145 633**
A2

(12) ## DEMANDE DE BREVET EUROPEEN

(21) Numéro de dépôt: **84460013.0**

(22) Date de dépôt: **12.12.84**

(51) Int. Cl.⁴: **A 22 C 7/00**

(30) Priorité: **15.12.83 FR 8320255**

(43) Date de publication de la demande: **19.06.85**
**Bulletin 85/25**

(84) Etats contractants désignés: **AT BE CH DE GB IT LI LU NL SE**

(71) Demandeur: **EUROPLASTIQUES S.A., 45-69 Boulevard de Buffon Z.I. des Touches B.P. 127, F-53007 Laval Cédex (FR)**

(72) Inventeur: **Menez, Jean, 21, rue Gaubin Loperhet, F-29213 Plougastel Daoulas (FR)**

(74) Mandataire: **Le Guen, Louis François, Cabinet Louis Le Guen 1, avenue Edouard VII B.P. 91, F-35802 Dinard Cédex (FR)**

(54) **Conteneur de moulage de jambon.**

(57) Le conteneur est formé d'un bac creux, avec son ouverture, une fois rempli, surmontée par un couvercle intercalaire. Le couvercle a la forme d'une coupelle renversée.

Les bords inférieurs (4) des parois verticales du couvercle comportent des indentations. Sa face intérieure, ainsi que celle du fond du conteneur, comporte des rugosités, généralement sous forme de striures. La paroi horizontale du couvercle est percée de petits trous le long d'une ligne parallèle à son pourtour. Ses parois verticales sont percées de petits trous (12) le long d'une ligne parallèle à son pourtour.

En variante, la paroi horizontale du couvercle comporte un trou central, des fentes qui se trouvent sur les lignes reliant le centre du couvercle aux centres des côtés et des fentes qui se trouvent sur les lignes reliant les centres de deux côtés adjacents du couvercle. D'autres variantes sont prévues.

Conteneur de moulage de jambon

La présente invention concerne des perfectionnements au conteneur de moulage de jambon décrit dans la demande française FR-A-2 505 297 déposée par le présent demandeur le 11 mai 1981.

Dans cette demande de brevet, on a décrit un conteneur de moulage en matière plastique formé d'un bac creux muni de rebords vers l'extérieur, ledit conteneur de moulage étant placé dans une contre-forme résistante, empêchant la déformation du conteneur de moulage sous l'influence de la pression interne entraînée par l'application de la plaque de pression, l'ouverture dudit conteneur, une fois rempli, étant surmontée par un couvercle intercalaire pouvant entrer dans ledit conteneur au-dessus du jambon, ledit couvercle intermédiaire ayant une épaisseur prédéterminée de manière qu'après le retrait du jambon à la cuisson sa surface supérieure soit pratiquement au niveau du rebord dudit conteneur, ledit conteneur étant, après la cuisson, serti, au-dessus du couvercle intercalaire, par une feuille étanche. Plus particulièrement, il y est prévu que ledit couvercle intercalaire a la forme d'une coupelle renversée dont les parois latérales ont une hauteur relativement grande. De plus, le couvercle intercalaire est percé de trous. Le conteneur sert à cuire le jambon, puis à le conserver.

Dans l'exemple de conteneur décrit dans le brevet mentionné ci-dessus, les bords inférieurs de la coupelle servant de couvercle intermédiaire étaient droits. Il en résultait que ces bords tassaient la viande lors de leur descente en cours de cuisson ce qui gênait la remontée des exudats. Or, si les exudats et les graisses restent bloqués à l'intérieur, ils forment des agglomérats de gelée qui nuisent à la présentation du jambon.

Un objet de la présente invention consiste à prévoir des formes de couvercles intercalaires telles que ceux-ci laissent mieux remonter et passer les graisses et les exudats pendant la cuisson.

Selon une caractéristique de l'invention, le couvercle intercalaire a la forme d'une coupelle renversée dont le pourtour a la forme de l'ouverture du conteneur et dont le bord inférieur des parois verticales comporte des indentations.

Selon une autre caractéristique, la face intérieure du couvercle intercalaire comporte des rugosités ou picots, généralement sous forme de striures.

Selon une autre caractéristique, la surface du fond du conteneur de moulage de jambon comporte des rugosités, généralement sous forme de striures.

Selon une autre caractéristique, la paroi horizontale du couvercle est percée de petits trous le long d'une ligne parallèle au pourtour du dessus du couvercle.

Selon une autre caractéristique, les parois verticales sont percées de petits trous le long d'une ligne parallèle au pourtour du dessus du couvercle.

Selon une autre caractéristique, la paroi horizontale du couvercle comporte un trou central, des fentes qui se trouvent sur les lignes reliant le centre du couvercle aux centres des côtés et des fentes qui se trouvent sur les lignes reliant les centres de deux côtés adjacents du couvercle.

Selon une autre caractéristique, la paroi horizontale du couvercle comporte des fentes parallèles au pourtour du dessus du couvercle.

Selon une autre caractéristique, la paroi horizontale du couvercle est constituée par une bande périphérique et des pattes partant de cette bande vers le centre.

Selon une autre caractéristique, la paroi horizontale du couvercle comporte des trous sur toute sa surface et des traverses, soit longitudinales, soit transversales, en saillie sur la face extérieure.

Selon une autre caractéristique, des trous sont prévus dans la paroi horizontale du couvercle, à proximité du milieu des petits côtés ou dans les angles, pour le passage de deux tuyaux ayant une longueur légèrement supérieure à la profondeur du conteneur.

Selon une autre caractéristique, les tuyaux sont réalisés sous forme de tunnels dans l'épaisseur de la paroi du conteneur.

Selon une autre caractéristique, les parois verticales sont partiellement séparées par des fentes verticales.

Selon une autre caractéristique, la face externe des parois verticales comporte à chaque coin du couvercle une mince protubérance verticale, plus importante dans sa partie supérieure que dans sa partie inférieure.

Les caractéristiques de l'invention mentionnées ci-dessus, ainsi que d'autres, apparaîtront plus clairement à la lecture de la description d'exemples de réalisation, la description étant faite en relation avec les dessins joints, parmi lesquels:

la Fig. 1 est une vue en plan partielle d'un couvercle,

la Fig. 2 est une vue en élévation du couvercle de la Fig. 1, la moitié droite étant coupée selon la ligne I-I de la Fig.1,

la Fig. 3 est une vue de bout du couvercle de la Fig. 1, la moitié gauche étant coupée selon la ligne II-II de la Fig. 1, et

les Figs. 4, 5, 6 et 7 sont des vues en plan de dessus de variantes de couvercles.

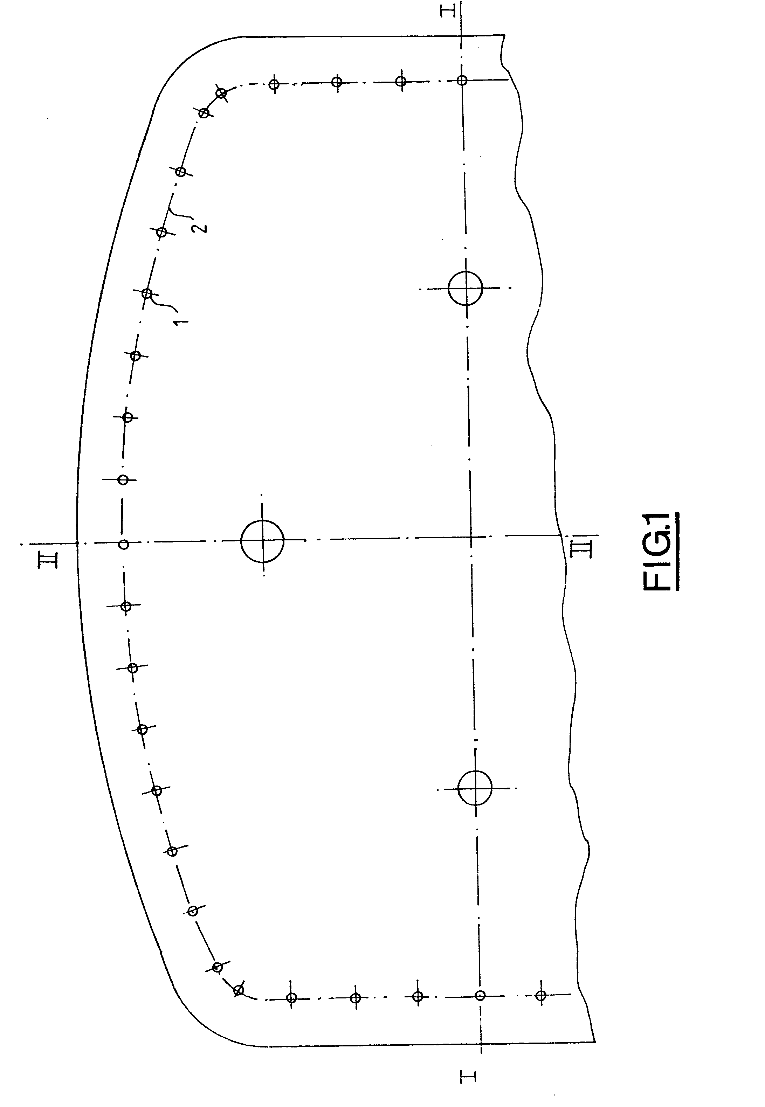

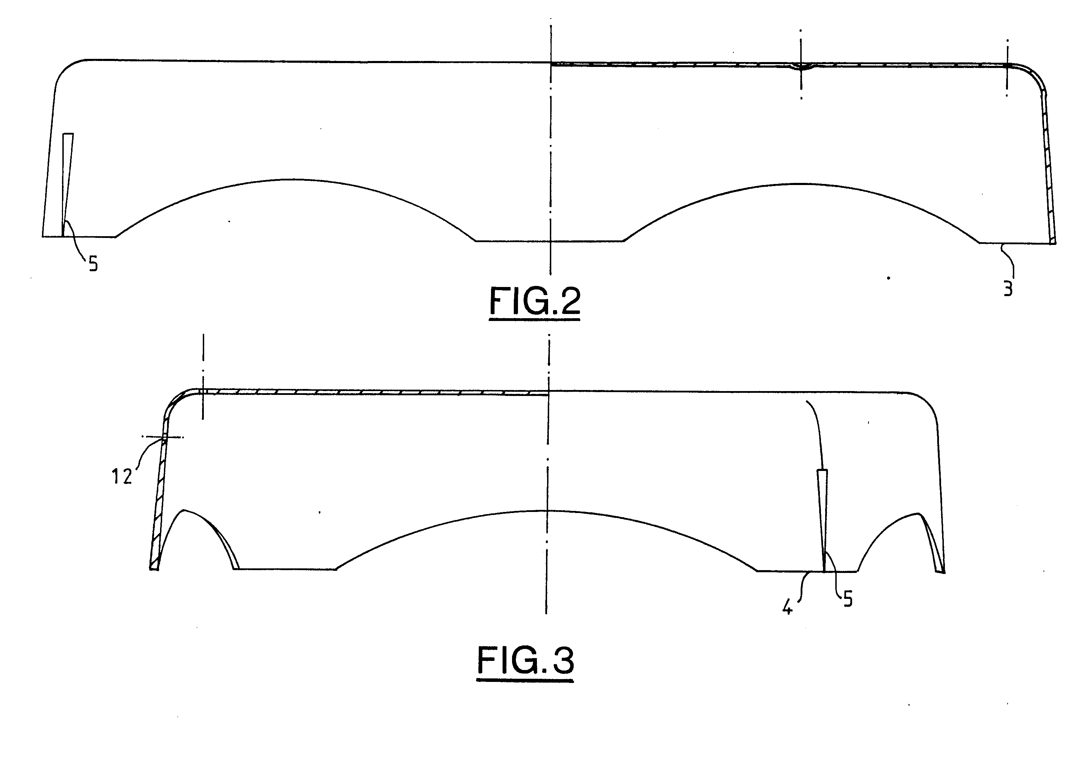

La paroi horizontale ou dessus du couvercle de la Fig. 1 comporte des petits trous 1 régulièrement espacés le long d'une ligne 2 parallèle au pourtour du couvercle. Les parois verticales longitudinales du couvercle, Fig. 2, ont leur bord inférieur 3 en forme de deux indentations à la suite l'une de l'autre. Le bord inférieur 4 des parois verticales latérales, Fig. 3, du couvercle a la forme d'une indentation. Avec les couvercles à bords inférieurs droits, malgré le jeu prévu entre le couvercle et le conteneur, sous l'effet de la presse, la viande avait tendance à se tasser sous les bords du couvercle et à bourrer l'espace entre le couvercle et le conteneur, empêchant en partie le jus de passer en cours de cuisson. Les bords des couvercles comportant des indentations ne tassent pas la viande. Les parties des bords qui se trouvent entre les indentations pénètrent dans la viande et le jus peut passer facilement au niveau de la partie supérieure des indentations. Les indentations peuvent être de formes et de tailles différentes et leur nombre peut varier d'un exemple de réalisation à un autre.

La face interne du couvercle intercalaire et la surface du fond du conteneur de moulage comportent des rugosités, généralement sous forme de striures. Grâce à ces striures, le jus s'évacue plús facilement dans le fond du conteneur et la partie inférieure du jambon est plus sèche tandis que sa partie supérieure adhère bien à la surface interne du couvercle intercalaire, même quand on a enlevé la presse. A noter que cette adhérence peut être obtenue par la réalisation de picots sur le fond du couvercle.

La face externe des parois longitudinales et latérales du couvercle intercalaire comporte de minces protubérances telles que 5 à chaque coin du couvercle. Les protubérances 5 sont verticales et sont plus importantes dans leur partie supérieure que dans leur partie inférieure. Leur extrémité inférieure se trouve au niveau du bord inférieur des parois verticales et leur hauteur est égale environ aux deux tiers de la hauteur desdites parois. Les protubérances 5 ont pour fonction d'empêcher que les couvercles se bloquent les uns dans les autres quand on les empile, à vide.

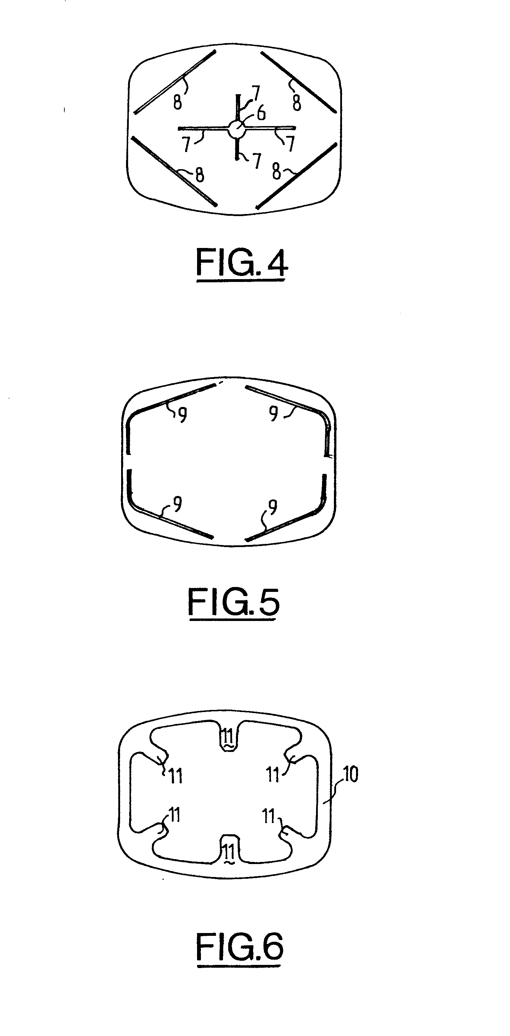

A la Fig. 4, au lieu des trous 1 ou en plus de ceux-çi, un trou central 6 et des fentes 7 et 8 constituent des ouvertures dans la paroi horizontale du couvercle. Les fentes 7 partent du trou central 6 et sont disposées le long des lignes joignant le centre du couvercle aux centres de ses côtés, sur la moitié de la longueur de ces lignes environ. Les fentes 8 sont disposées selon les côtés – et sur leur plus grande partie – d'un losange dont les sommets sont les centres des côtés du couvercle.

Encore en variante, à la Fig. 5, à la place des trous 1, la paroi horizontale du couvercle comporte quatre fentes 9 disposées selon une ligne parallèle au pourtour du couvercle. Chaque fente relie les parties médianes de deux côtés adjacents du couvercle.

Encore en variante, à la Fig. 6, la paroi horizontale du couvercle se limite à une bande périphérique 10 à partir de laquelle partent, dirigées sensiblement vers le centre, des pattes 11 à chaque angle et dans la partie centrale de chaque côté longitudinal. La longueur des pattes 11 est égale environ au quart de la largeur du couvercle. Avec un tel couvercle, il est préférable de disposer une feuille de papier ou de plastique alimentaire entre la viande et le couvercle pour qu'il n'y ait pas de contact entre la presse et la viande. La feuille de papier ou plastique comporte également des perforations.

Encore en variante, à la Fig. 7, la paroi horizontale du couvercle comporte des trous 13 sur toute sa surface. Grâce à des traverses longitudinales 14, en saillie sur la face extérieure de ladite paroi, la presse et celle-ci ne sont pas en contact direct et les trous 13 restent libre d'où une bonne évacuation du jus.

Par ailleurs, il est également possible de prévoir des rangées horizontales de petits trous, tels que les trous 12, Fig. 3, dans les zones supérieures des parois verticales. A noter encore que les parois latérales peuvent ne former qu'une collerette continue ou bien être partiellement séparées aux quatre coins par des fentes partant de leurs bords inférieurs.

Pour une meilleure évacuation encore des graisses et des exudats, les couvercles décrits ci-dessus peuvent être percés de trous à proximité du milieu de leurs petits côtés, ou dans les angles. Dans ces trous, on passe des petits tuyaux dont l'extrémité inférieure se trouve au fond du conteneur et dont l'extrémité supérieure se trouve légèrement au-dessus du couvercle. En cours de cuisson, une partie de la graisse et des exudats se trouvant dans le fond du conteneur remonte par les tuyaux. Dans une variante, les tuyaux sont formés par des voiles verticaux de plastique orientés à 45° entre les parois du conteneur à chacune de ses arêtes sensiblement verticales, les voiles venant directement de moulage et ne descendant pas jusqu'au fond, de manière à créer des conduits ouverts en bas et en haut.

Dans le brevet principal, on a mentionné l'utilisation d'une feuille de plastique ou d'aluminium 16, Fig. 3, soudée aux bords du conteneur pour fermer celui-ci, l'opération de sertissage se faisant de préférence sous un léger vide. On peut éventuellement compléter l'opération de sertissage par une réinjection de gaz. Cette opération peut être faite avec une pellicule de film thermoformé ou d'un complexe aluminium plastique imperméable au gaz qui épouse la forme de la partie supérieure du jambon.

On peut aussi prévoir d'emballer l'ensemble composé par le conteneur, le jambon et le couvercle dans un sac en matière plastique qu'on ferme ensuite sous vide. On peut également prévoir une soudure par ultrason ou autre moyen entre les côtés latéraux du couvercle intercalaire et les côtés du conteneur.

Le jambon dit "LABEL" a une forme spéciale qui permet au consommateur de le différencier des autres jambons. Sa partie supérieure comporte un creux sur toute sa longueur si bien que les tranches sont échancrées sur un de leur côté. Des couvercles intercalaires spéciaux sont prévus pour la fabrication du jambon LABEL, leur paroi horizontale comportant dans leur partie médiane une traverse longitudinale en saillie sur la face intérieure. Des couvercles intercalaires à double emploi peuvent aussi être prévus, ladite traverse étant alors amovible.

REVENDICATIONS

1) Conteneur de moulage de jambon selon une des revendications 1, 3 et 4 du brevet FR-A-2 505 297, formé d'un bac creux muni de rebords vers l'extérieur, ledit conteneur de moulage étant placé dans une contre-forme résistante, empêchant la déformation du conteneur de moulage sous l'influence de la pression interne entraînée par l'application de la plaque de pression, l'ouverture dudit conteneur, une fois rempli, étant surmontée par un couvercle intercalaire pouvant entrer dans ledit conteneur au-dessus du jambon, ledit couvercle intercalaire ayant une épaisseur prédéterminée de manière qu'après le retrait du jambon à la cuisson sa surface supérieure soit pratiquement au niveau du rebord dudit conteneur, ledit couvercle intercalaire ayant la forme d'une coupelle renversée dont les parois latérales ont une hauteur relativement grande et/ou le couvercle intercalaire étant percé de trous, caractérisé en ce que le couvercle intercalaire a la forme d'une coupelle renversée dont le pourtour a la forme de l'ouverture du conteneur et dont le bord inférieur (3, 4) des parois verticales comporte des indentations.

2) Conteneur de moulage de jambon selon la revendication 1, caractérisé en ce que la face intérieure du couvercle intercalaire comporte des rugosités, généralement sous forme de striures.

3) Conteneur de moulage de jambon selon la revendication 1 ou 2, caractérisé en ce que la surface du fond du conteneur comporte des rugosités, généralement sous forme de striures.

4) Conteneur de moulage de jambon selon une des revendications 1 à 3, caractérisé en ce que la paroi horizontale du couvercle intercalaire est percée de petits trous (1) le long d'une ligne (2) parallèle au pourtour du dessus du couvercle.

5) Conteneur de moulage de jambon selon une des revendications 1 à 4, caractérisé en ce que les parois verticales du couvercle intercalaire sont percées de petits trous (12) le long d'une ligne parallèle au pourtour du dessus du couvercle.

6) Conteneur de moulage de jambon selon une des revendications 1 à 5, caractérisée en ce que la paroi horizontale du couvercle intercalaire comporte un trou central (6), des fentes (7) qui se trouvent sur les lignes reliant le centre du couvercle aux centres des côtés et des fentes (8) qui se trouvent sur les lignes reliant les centres de deux côtés adjacents du couvercle.

7) Conteneur de moulage de jambon selon une des revendications 1, 2, 3 ou 5, caractérisé en ce que la paroi horizontale du couvercle intercalaire comporte des fentes (9) parallèles au pourtour du dessus du couvercle.

8) Conteneur de moulage de jambon selon une des revendications 1, 2, 3 ou 5, caractérisé en ce que la paroi horizontale du couvercle intercalaire est constituée par une bande périphérique (10) et des pattes (11) partant de cette bande vers le centre.

9) Conteneur de moulage de jambon selon une des revendications 1, 2, 3 ou 5, caractérisé en ce que la paroi horizontale du couvercle intercalaire comporte des trous (13) sur toute sa surface et des traverses (14) en saillie sur sa face extérieure.

10) Conteneur de moulage de jambon selon une des revendications 1 à 9, caractérisé en ce que des trous sont prévus dans la paroi horizontale du couvercle intercalaire, à proximité du milieu des petits côtés ou des angles, pour le passage de tuyaux ayant une longueur légèrement supérieure à la profondeur du conteneur, les tuyaux pouvant être réalisés sous forme de tunnels dans l'épaisseur de la paroi du conteneur.

11) Conteneur de moulage de jambon selon une des revendications 1 à 10, caractérisé en ce que les parois verticales du couvercle intercalaire sont partiellement séparées par des fentes verticales.

12) Conteneur de moulage de jambon selon une des revendications 1 à 11, caractérisé en ce que la face externe des parois verticales du couvercle intercalaire comporte à chaque coin du couvercle une mince protubérance verticale (5), plus importante dans sa partie supérieure que dans sa partie inférieure.

0145633

FIG.1

FIG.2

FIG.3

PL.3/3

0145633

FIG.4

FIG.5

FIG.6